# EUROPÄISCHE PATENTSCHRIFT

(11) **EP 0 737 606 B1**
(45) Veröffentlichungstag und Bekanntmachung des Hinweises auf die Patenterteilung: **15.09.1999**
(21) Anmeldenummer: 96105281.8
(22) Anmeldetag: 02.04.1996
(51) Int. Cl.: B60R 22/46

(54) **Gurtaufroller für ein Fahrzeugsicherheitsgurtsystem**
Belt retractor for a vehicle seatbelt system
Enrouleur de ceinture pour un système de ceinture de sécurité de véhicule

(30) Priorität: 11.04.1995 DE 19513724
(43) Veröffentlichungstag der Anmeldung: 16.10.1996
(73) Patentinhaber: TRW Occupant Restraint Systems GmbH & Co. KG, 73551 Alfdorf (DE)
(72) Erfinder: Schmid, Johannes, 73527 Schwäbisch Gmünd (DE)
(74) Vertreter: Degwert, Hartmut, Dipl.-Phys.

(56) Entgegenhaltungen:
- EP-A- 0 093 233
- DE-U- 29 500 807
- FR-A- 2 491 340
- US-A- 3 077 324
- US-A- 4 546 934
- US-A- 4 568 037
- PATENT ABSTRACTS OF JAPAN vol. 009, no. 249 (M-419), 5.Oktober 1985 & JP-A-60 099744 (NIPPON JIDOSHA BUHIN SOGO KENKYUSHO KK ET AL.), 3.Juni 1985,

## Beschreibung

Die Erfindung betrifft einen Gurtaufroller für ein Fahrzeugsicherheitsgurtsystem, mit einer Blockiervorrichtung für eine Gurtspule und einem Rotations-Gurtstrafferantrieb, der triebschlüssig mit einem Antriebsritzel für die Gurtspule über eine Kupplung verbindbar ist, die zwischen einer Ruhestellung außer Eingriff mit dem Antriebsritzel und einer Arbeitsstellung in Eingriff mit dem Antriebsritzel bewegbare Kupplungsklinken aufweist, wobei die Kupplungsklinken sowohl aus der Ruhestellung in die Arbeitsstellung als auch aus der Arbeitsstellung in die Ruhestellung durch Auflaufen auf relativ zu ihnen rotierende Steuerflächen zwangsbewegbar sind.

Bei einem solchen Gurtaufroller, der aus der gattungsbildenden US-A-4 546 934 bekannt ist, wird erst durch Aktivierung der Kupplung eine Antriebsverbindung zwischen der Gurtspule und dem Gurtstrafferantrieb hergestellt, so daß die Gurtspule im normalen Betrieb unbehindert drehbar ist. Es ist jedoch anzustreben, daß die Gurtspule auch nach erfolgtem Straffvorgang wieder unbehindert drehbar ist.

Somit besteht die Aufgabe der Erfindung darin, einen Gurtaufroller der eingangs genannten Art dahingehend weiterzubilden, daß die Antriebsverbindung der Kupplung nach Beendigung des Straffvorganges in zuverlässiger Weise wieder aufgehoben wird.

Diese Aufgabe wird bei einem Gurtaufroller der eingangs genannten Art dadurch gelöst, daß die Kupplung antriebsseitig eine Nabe aufweist, an der die Kupplungsklinken auslenkbar abgestützt sind, und einen lösbar am Gehäuse des Gurtaufrollers festgelegten Käfig, an dem die Steuerflächen gebildet sind, und daß die Nabe konzentrisch zu dem Antriebsritzel angeordnet ist, daß zwischen der Nabe und dem Antriebsritzel ein Ringraum gebildet ist, in dem die Kupplungsklinken angeordnet sind, die mit einem ersten Ende so an der Nabe abgestützt sind, daß ihr zweites Ende in die Verzahnung des Antriebsritzels eingeschwenkt werden kann, daß die Kupplungsklinken jeweils mit einer Einsteuerrampe und einer Aussteuerrampe versehen sind und daß die Steuerflächen des Käfigs, der ebenfalls zu dem Antriebsritzel konzentrisch ist, an zwischen den Kupplungsklinken in den Ringraum hineinragenden Vorsprüngen als Einsteuerflächen und Aussteuerflächen ausgebildet sind, die mit den Einsteuerrampen bzw. den Aussteuerrampen zusammenwirken.

Diese Gestaltung ermöglicht durch die Zwangsbewegung der Kupplungsklinken in zuverlässiger Weise, die Antriebsverbindung der Kupplung nach Beendigung des Straffvorganges wieder aufzuheben. Ferner wird eine besonders kompakte Form der Kupplung sowohl in axialer als auch in radialer Richtung ermöglicht, da das Verstellen der Kupplungsklinken durch eine Drehbewegung bewirkt wird.

Gemäß der bevorzugten Ausführungsform der Erfindung ist vorgesehen, daß das erste Ende jeder Kupplungsklinke als balliger Ansatz ausgebildet ist, der schwenkbar in einer entsprechend geformten Ausnehmung an der Innenseite der Nabe gelagert ist. Im Zusammenwirken mit der Zwangsbewegung für die Kupplungsklinken kann durch diese Abstützung für das erste Ende der Kupplungsklinken eine besonders einfache Lagerung der Kupplungsklinken erzielt werden.

Gemäß der bevorzugten Ausführungsform der Erfindung ist ferner vorgesehen, daß die Nabe für jede Kupplungsklinke eine radiale Abstützschulter aufweist. Durch diese Gestaltung wird eine besonders vorteilhafte Krafteinleitung in die Kupplungsklinken erzielt, was zu der kompakten Form der Kupplung beiträgt.

Die Erfindung wird nachfolgend unter Bezugnahme auf die bevorzugte Ausführungsform beschrieben, die in der Zeichnung dargestellt ist. In dieser zeigen:
- Figur 1 eine perspektivische Explosionsansicht eines erfindungsgemäßen Gurtaufrollers;
- Figur 2 eine perspektivische und teilgeschnittene Ansicht einer in dem Gurtaufroller von Figur 1 verwendeten Kupplung;
- Figur 3 einen schematischen Querschnitt durch die Kupplung von Figur 2, die sich in der Ruhestellung befindet; und
- Figur 4 einen schematischen Querschnitt durch die Kupplung von Figur 2, die sich in der Arbeitsstellung befindet.

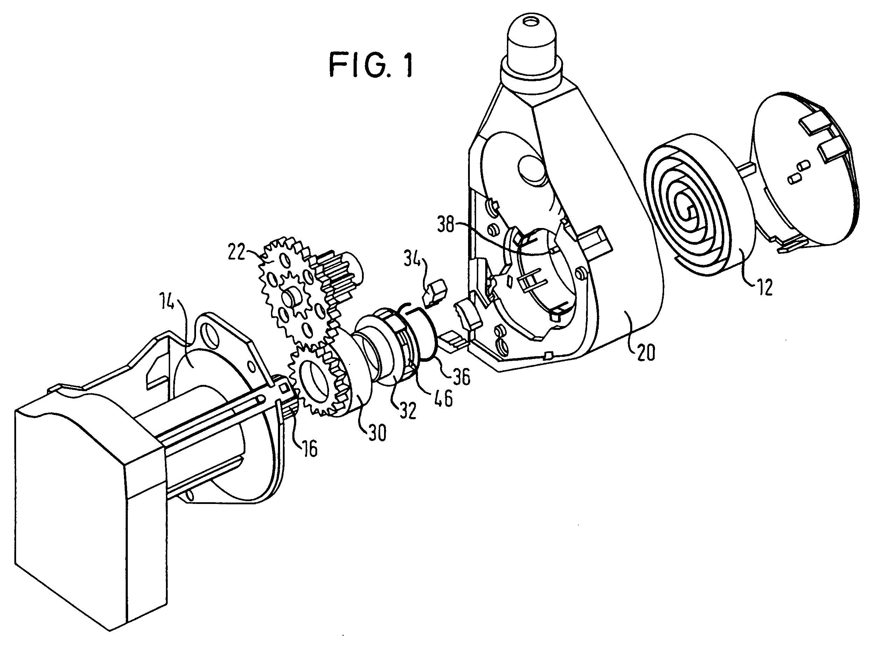

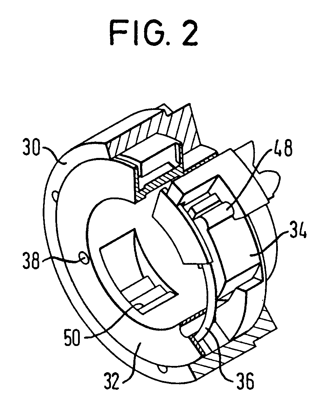

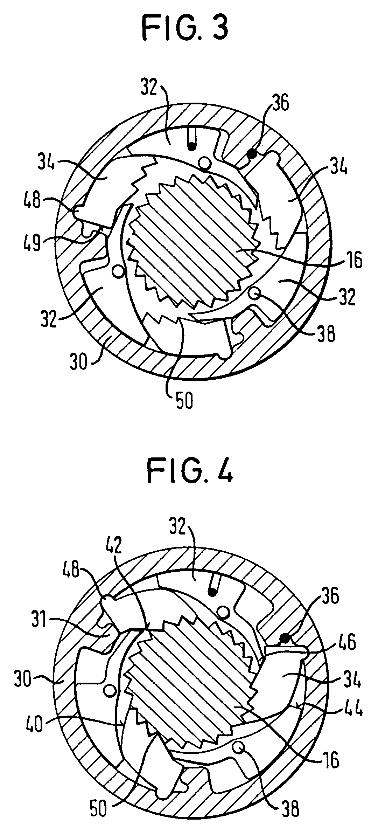

In Figur 1 ist eine perspektivische Ansicht eines erfindungsgemäßen Gurtaufrollers und in Figur 2 eine perspektivische Ansicht einer in ihm enthaltenen Kupplung dargestellt. Der in Figur 1 dargestellte Gurtaufroller umfaßt eine Gurtspule 14, die an ihrer bezüglich dieser Figur linken Seite mit einer allgemein bekannten, hinter einer Abdeckung verdeckten Blockiervorrichtung zum selektiven Sperren der Gurtspule sowie an ihrer bezüglich der Figur rechten Seite mit einem Gurtstrafferantrieb 20 versehen ist. Die Art und Weise, in der die Blockiervorrichtung die Gurtspule 14 sperren und der Gurtstrafferantrieb 20 eine Straffwirkung für die Gurtspule 14 bereitstellen kann, ist für das Verständnis der Erfindung ohne Bedeutung; entscheidend ist, daß die Straffwirkung des Gurtstrafferantriebs 20 auf die Kupplung des Gurtaufrollers übertragen wird. Dies geschieht im vorliegenden Fall über ein Übertragungszahnrad 22, welches auf eine die Antriebsseite der Kupplung bildenden Habe 30 einwirkt. Diese Nabe 30 ist konzentrisch zu einem die Abtriebsseite der Kupplung bildenden, fest mit der Gurtspule 14 verbundenen Antriebsritzel 16 angeordnet, wobei ein Ringraum zwischen dem Antriebsritzel 16 und der Nabe 30 gebildet ist. In diesem Ringraum sind drei Kupplungsklinken 34 im gleichen Winkelabstand um das Antriebsritzel 16 herum angeordnet, und sie weisen an ihrem ersten Ende einen balligen Ansatz 48 auf, der in einer entsprechenden Ausnehmung so an der Innenseite der Nabe 30 abgestützt ist, daß ihr zweites Ende 50 zwischen einer von der Verzahnung des Antriebsritzels 16 entfernten Ruhestellung und einer in die Verzahnung eingesteuerten Arbeitsstellung verschwenkt werden kann. Die Abstützung der Kupplungsklinken 34 an der Nabe ist so ausgebildet (siehe auch Figuren 3 und 4), daß in der Arbeitsstellung der Kupplungsklinken 34 diese zusätzlich zu ihrem Ansatz 48 auch mit einer diesem benachbarten Anlagefläche 49 an einer radialen Abstützschulter 31 an der Innenseite der Habe 30 angestützt sind, so daß ein besonders vorteilhafter Kraftfluß von der Nabe in tangentialer Richtung zum Antriebsritzel 16 erzielt wird.

Jede Kupplungsklinke 34 ist mit einer Einsteuerrampe 40 und einer Aussteuerrampe 42 versehen. An dem zweiten Ende 50 ist jede Kupplungsklinke 34 mit mehreren Kupplungszähnen versehen, die zu der Verzahnung des Antriebsritzels 16 komplementär ist. Es wird bevorzugt, daß die Verzahnung des Antriebsritzels 16 nicht hinterschnitten ist. Dies bedeutet, daß der Spitzenwinkel der Verzahnung größer oder gleich dem Wert ist, der einer Ausrichtung der die Drehmomentübertragung in der Kupplung gewährleistenden Flächen entspricht, bei der die Tangenten an diese Flächen durch die Rotationsachse des Antriebsritzels 16 laufen. Die Kupplung umfaßt weiterhin einen ebenfalls zu dem Antriebsritzel 16 konzentrischen Käfig 32, der mit drei Vorsprüngen in den Ringraum und zwischen die Kupplungklinken 34 hineinragt. Diese Vorsprünge sind mit Steuerflächen versehen, und zwar jeweils mit einer Einsteuerfläche 44 und einer Aussteuerfläche 46, die mit der Einsteuerrampe 40 bzw. der Aussteuerrampe 42 zusammenwirken. Der Käfig kann relativ zu den Kupplungsklinken 34 zwischen einer ersten Stellung oder Ausgangsstellung, in der die Kupplungsklinken 34 durch Zusammenwirken der Aussteuerrampen 42 und der Aussteuerflächen 46 in der Ruhestellung gehalten werden (siehe Figur 3), und einer zweiten Stellung verdreht werden, in der die Kupplungsklinken 34 durch Zusammenwirken der Einsteuerrampen 40 und der Einsteuerflächen 44 in der Arbeitsstellung gehalten werden (siehe Figur 4). Der Käfig 32 ist vor dem Auslösen des Gurtstrafferantriebes 20 über Scherstifte 38 drehfest mit dem Gehäuse des Gurtaufrollers verbunden. In dem Ringraum ist ferner eine Rückstellfeder 36 angeordnet, die mit einem Ende an dem Käfig 32 und mit dem anderen Ende an der Habe 30 abgestützt ist. Der Gurtaufroller ist schließlich mit einer Aufwickelfeder 12 für die Gurtspule 14 versehen, welche die Gurtspule 14 in die Drehrichtung des Aufwickelns des Gurtbandes beaufschlagt.

Die Funktionsweise des Gurtaufrollers wird nachfolgend unter Bezugnahme auf die Figuren 3 und 4 beschrieben. In Figur 3 ist der Käfig 32 in seiner ersten Stellung dargestellt. Es ist zu sehen, daß die Kupplungsklinken 34 durch Anlage ihrer Aussteuerrampen 42 an den Aussteuerflächen 46 des Käfigs in der Ruhestellung gehalten werden, in der die zweiten Enden 50 der Kupplungsklinken 34 von der Verzahnung des Antriebsritzels 16 beabstandet sind. In dieser Stellung befindet sich die Kupplung vor dem Auslösen des Straffvorganges. Wenn der Straffvorgang ausgelöst wird, wird die Habe 30 bezüglich der Figuren 3 und 4 im Uhrzeigersinn relativ zu dem Antriebsritzel 16 gedreht. Da der Käfig 32 über die Scherstifte 38 drehfest mit dem Gurtaufroller verbunden ist, ergibt sich eine Bewegung der an der Habe 30 abgestützten Kupplungsklinken 34 relativ zu dem Käfig 32. Dabei werden die Kupplungsklinken 34 durch Auflaufen ihrer Einsteuerrampen 40 auf den Einsteuerflächen 44 des Käfigs in die Arbeitsstellung verschwenkt, während gleichzeitig die Aussteuerrampen 42 von den Aussteuerflächen 46 freigegeben werden, so daß es zu einem Eingriff der Kupplungszähne des zweiten Endes 50 der Kupplungsklinken 34 in die Verzahnung des Antriebsritzels 16 kommt. Aufgrund der Anordnung der Kupplungsklinken 34 und der gewählten Verzahnung des Antriebsritzels 16 wirkt ab einem ersten Kontakt zwischen den ersten Enden 50 der Kupplungsklinken 34 und dem Antriebsritzel 16 auf die Kupplungsklinken 34 ein Drehmoment ein, welches das vollständige Einsteuern der Kupplungsklinken 34 in die Verzahnung des Antriebsritzels 16 unterstützt. Dieser vollständig eingesteuerte Zustand der Kupplungsklinken 34 ist in Figur 4 dargestellt. Hierbei kommt es zu einer Anlage der Anlageflächen 49 an der Nabe 30. Sobald der vollständig eingesteuerte Zustand erreicht ist, kann keine weitere Relativbewegung zwischen den Kupplungsklinken 34 und dem Käfig 32 auftreten. Die den Käfig 32 mit dem Gurtaufroller verbindenden Scherstifte 38 sind jedoch so ausgelegt, daß sie nach Erreichen des in Figur 4 dargestellten Zustandes der Kupplung, also der zweiten Stellung des Käfigs 32, bei einer weiteren Drehung der Nabe 30 abgeschert werden. Dadurch ist der Käfig 32 zusammen mit der Nabe 30 und den Kupplungsklinken 34 frei drehbar, und das beim Straffvorgang von dem Gurtstrafferantrieb 20 auf die Gurtspule 14 aufgebrachte Drehmoment wird über den Formschluß zwischen der Nabe 30 und den Kupplungsklinken 34 einerseits und den Kupplungsklinken 34 und dem Antriebsritzel 16 andererseits übertragen. Da die Zwangsbewegung der Kupplungsklinken 34 durch eine Drehbewegung, und zwar durch eine Drehbewegung des Käfigs 32 relativ zu den Kupplungsklinken 34, erzielt wird und sich aufgrund der Anlageflächen 49 und der Abstützschultern 31 ein besonders vorteilhafter Kraftfluß in den Kupplungsklinken 34 ergibt, ist die Kupplung besonders kompakt. Durch das Zusammenwirken der Steuerflächen des Käfigs 32 mit den Kupplungsklinken 34 ist ferner gewährleistet, daß der ballige Ansatz 48 jeder Kupplungsklinke 34 in der für ihn vorgesehenen Ausnehmung an der Innenseite der Nabe 30 verbleibt.

Wenn nach dem Beenden des Straffvorganges die Belastung im Sicherheitsgurtsystem wieder absinkt, vermindert sich auch das in der Kupplung wirkende Drehmoment. Sobald dieses Drehmoment einen vorbestimmten Wert unterschreitet, stellt die zwischen der Nabe 30 und dem Käfig 32 wirkende Rückstellfeder 36, welche den Käfig 32 in seine erste Stellung beaufschlagt, den Käfig 32 bezüglich Figur 4 im Uhrzeigersinn relativ zu der Nabe 30 und den Kupplungsklinken 34 aus der zweiten in die erste Stellung zurück. Dadurch werden die Kupplungsklinken 34 durch Zusammenwirken ihrer Aussteuerrampen 42 mit den Aussteuerflächen 46 des Käfigs 32 wieder in die Ruhestellung verschwenkt, wobei die Einsteuerflächen 40 die Einsteuerrampen 44 freigeben, so daß das zweites Ende 50 der Kupplungsklinken von der Verzahnung des Antriebsritzels 16 gelöst ist. Somit ist der Triebschluß zwischen dem Gurtstrafferantrieb 20 und der Gurtspule 14 aufgehoben; die Gurtspule 14 ist wieder frei drehbar. Das Lösen der Kupplung geschieht in zuverlässiger Weise, da sich aufgrund der nicht hinterschnittenen Verzahnung des Antriebsritzels 16 die Kupplungszähne der Kupplungsklinken 34 nicht in der Verzahnung verklemmen können. Das Überführen des Käfigs 32 aus seiner zweiten in seine erste Stellung wird von der Wirkung der Aufwickelfeder 12 unterstützt, da diese eine Aufwickelbewegung der Gurtspule hervorzurufen sucht, welche das Freikommen der Kupplungszähne der Kupplungsklinken 34 aus der Verzahnung erleichtert. Dieser unterstützenden Wirkung der Aufwickelfeder 12 sind jedoch sehr enge Grenzen gesetzt, da eine zu stark dimensionierte Aufwickelfeder zu Komforteinbußen für den Fahrzeuginsassen bei angelegtem Sicherheitsgurt führt. Dagegen wirkt sich eine stärkere Dimensionierung der Rückstellfeder 36 nicht auf den Tragekomfort des Sicherheitsgurtes aus, so daß diese Rückstellfeder so stark dimensioniert werden kann, daß ein zuverlässiges Lösen der Kupplung nach einem Straffvorgang gewährleistet ist. Die obere Grenze für die Dimensionierung der Rückstellfeder 36 ist jedoch durch die Forderung bestimmt, daß während eines Straffvorganges ein Überführen des Käfigs 32 aus seiner zweiten in seine erste Stellung zuverlässig verhindert sein muß.

## Patentansprüche

1. Gurtaufroller für ein Fahrzeugsicherheitsgurtsystem, mit einer Blockiervorrichtung für eine Gurtspule (14) und einem Rotations-Gurtstrafferantrieb (20), der triebschlüssig mit einem Antriebsritzel für die Gurtspule (14) über eine Kupplung verbindbar ist, die zwischen einer Ruhestellung außer Eingriff mit dem Antriebsritzel (16) und einer Arbeitsstellung in Eingriff mit dem Antriebsritzel (16) bewegbare Kupplungsklinken (34) aufweist, wobei die Kupplungsklinken (34) sowohl aus der Ruhestellung in die Arbeitsstellung als auch aus der Arbeitsstellung in die Ruhestellung durch Auflaufen auf relativ zu ihnen rotierende Steuerflächen (44, 46) zwangsbewegbar sind, dadurch gekennzeichnet, daß die Kupplung antriebsseitig eine Nabe (30) aufweist, an der die Kupplungsklinken (34) auslenkbar abgestützt sind, und einen lösbar am Gehäuse des Gurtaufrollers festgelegten Käfig (32), an dem die Steuerflächen (44, 46) gebildet sind, und daß die Nabe (30) konzentrisch zu dem Antriebsritzel (16) angeordnet ist, daß zwischen der Habe (30) und dem Antriebsritzel (16) ein Ringraum gebildet ist, in dem die Kupplungsklinken (34) angeordnet sind, die mit einem ersten Ende (48) so an der Nabe abgestützt sind, daß ihr zweites Ende (50) in die Verzahnung des Antriebsritzels (16) eingeschwenkt werden kann, daß die Kupplungsklinken (34) jeweils mit einer Einsteuerrampe (40) und einer Aussteuerrampe (42) versehen sind und daß die Steuerflächen des Käfigs (30), der ebenfalls zu dem Antriebsritzel (16) konzentrisch ist, an zwischen den Kupplungsklinken (34) in den Ringraum hineinragenden Vorsprüngen als Einsteuerflächen (44) und Aussteuerflächen (46) ausgebildet sind, die mit den Einsteuerrampen (40) bzw. den Aussteuerrampen (42) zusammenwirken.

2. Gurtaufroller nach Anspruch 1, dadurch gekennzeichnet, daß der Käfig (32) mit dem Gehäuse des Gurtaufrollers über Scherstifte (38) verbunden ist, die bei Drehung der Nabe (30) nach dem Einschwenken der Kupplungsklinken (34) abgeschert werden, und daß zwischen dem Käfig (32) und der Nabe (30) eine Rückstellfeder (36) wirkt, welche den Käfig (32) nach Beendigung eines Straffvorganges in seine Ausgangslage relativ zu der Nabe (30) zurückstellt.

3. Gurtaufroller nach einem der vorhergehenden Ansprüche, dadurch gekennzeichnet, daß drei Kupplungsklinken (34) im gleichen Winkelabstand um das Antriebsritzel (16) herum angeordnet sind.

4. Gurtaufroller nach einem der vorhergehenden Ansprüche, dadurch gekennzeichnet, daß die in die Verzahnung des Antriebsritzels (16) einsteuerbaren Enden der Kupplungsklinken (34) mit mehreren Kupplungszähnen versehen sind.

5. Gurtaufroller nach einem der vorhergehenden Ansprüche, dadurch gekennzeichnet, daß die Verzahnung des Antriebsritzels (16) nicht hinterschnitten ist.

6. Gurtaufroller nach einem der vorhergehenden Ansprüche, dadurch gekennzeichnet, daß das erste Ende jeder Kupplungsklinke (34) als balliger Ansatz (48) ausgebildet ist, der schwenkbar in einer entsprechend geformten Ausnehmung an der Innenseite der Nabe (30) gelagert ist.

7. Gurtaufroller nach einem vorhergehenden Ansprüche, dadurch gekennzeichnet, daß die Nabe (30) für jede Kupplungsklinke eine radiale Abstützschulter (31) aufweist.

## Claims

1. A belt retractor for a vehicle safety belt system, comprising a locking device for a belt drum (14) and a rotary belt pretensioner drive (20), said drive being able to be drivingly connected with a drive pinion for the belt drum (14) via a coupling having coupling pawls (34) able to be shifted between a rest position out of engagement with the drive pinion (16) and a working position in engagement with the drive pinion (16), the coupling pawls (34) being able to be moved positively both out of the rest position into the working position and furthermore out of the working position into the rest position by running against cam surfaces (44, 46) rotating in relation to them, characterized in that on a drive side thereof the coupling possesses a hub (30) on which the coupling pawls (34) are deflectably supported, and a cage (32) releasably fixed on the housing of the belt retractor and on which the cam surfaces (44, 46) are formed, and that the hub (30) is arranged concentrically to the drive pinion (16), that between the hub (30) and the drive pinion (16) an annular space is formed, in which the coupling pawls (34) are arranged, a first end (48) thereof so bearing on the hub that a second end (50) thereof is able to be pivoted into engagement with the gear teeth of the drive pinion (16), that the coupling pawls (34) are each provided with a guide in ramp (40) and with a guide out ramp (42), and that the cam surfaces of the cage (30), which is likewise concentric to the drive pinion (16), are formed on projections extending into the annular space between the coupling pawls (34) as guide in surfaces (44) and guide out surfaces (46), which cooperate with the guide in ramps (40) and, respectively, the guide out ramps (42).

2. The belt retractor as claimed in claim 1, characterized in that the cage (32) is connected with the housing of the belt retractor by means of shear pins (38) which on rotation of the hub (30) are shorn off after inward pivoting of the coupling pawls (34), and that between the cage (32) and the hub (30) a return spring (36) acts, which returns the cage (32) into its initial position in relation to the hub (30) after termination of the tensioning operation.

3. The belt retractor as claimed in any one of the preceding claims, characterized in that three coupling pawls (34) are arranged with equal angular spacing around the drive pinion (16).

4. The belt retractor as claimed in any one of the preceding claims, characterized in that the ends of the coupling pawls (34), which are able to be guided into engagement with the gear teeth of the drive pinion (16), are provided with a plurality of coupling teeth.

5. The belt retractor as claimed in any one of the preceding claims, characterized in that the gear teeth of the drive pinion (16) are not undercut.

6. The belt retractor as claimed in any one of the preceding claims, characterized in that the first end of each coupling pawl (34) is designed with a rounded projection (48), which is pivotally mounted in a correspondingly shaped recess at the inner side of the hub (30).

7. The belt retractor as claimed in any one of the preceding claims, characterized in that the hub (30) possesses a radial support shoulder (31) for each coupling pawl.

## Revendications

1. Enrouleur de ceinture pour un système de ceinture de sécurité de véhicule, avec un dispositif de blocage pour une bobine de ceinture (14) et avec un mécanisme (20) d'entraînement en rotation du tendeur de ceinture, que l'on peut relier au moyen d'un accouplement à un pignon d'entraînement de la bobine de ceinture (14) dans un engagement de commande, accouplement qui présente, entre une position de repos où il n'est pas en prise avec le pignon d'entraînement (16) et une position de travail où il est en prise avec le pignon d'entraînement (16), des cliquets mobiles d'accouplement (34), les cliquets d'accouplement (34), pour passer aussi bien de la position de repos à la position de travail que de la position de travail à la position de repos, pouvant être déplacés à force selon des surfaces de commande tournant par rapport à eux, caractérisé en ce que l'accouplement présente du côté de l'entraînement un moyeu (30), sur lequel les cliquets d'accouplement (34) prennent appui en pouvant se déployer, et une cage (32) fixée de manière amovible sur le boîtier de l'enrouleur de la ceinture, cage sur laquelle sont formées les surfaces de commande (44,46) et en ce que le moyeu (30) est disposé de façon concentrique au pignon d'entraînement (16), en ce qu'entre le moyeu (30) et le pignon d'entraînement (16), il est formé un espace annulaire, dans lequel sont disposés les cliquets d'accouplement (34), qui prennent appui par une première extrémité (48) sur le moyeu, d'une façon telle que leur seconde extrémité (50) peut pivoter jusque dans la denture du pignon d'entraînement (16), en ce que les cliquets d'accouplement (34) sont respectivement pourvus d'une rampe de commande d'entrée (40) et d'une rampe de commande de sortie (42) et en ce que les surfaces de commande de la cage (30), qui est également concentrique au pignon d'entraînement (16), sont constituées sur des saillies qui pénètrent dans l'espace annulaire entre les cliquets d'accouplement (34), en tant que surfaces de commande d'entrée (44) et surfaces de commande de sortie (46), qui coopèrent avec les rampes de commande d'entrée (40) ou les rampes de commande de sortie (42).

2. Enrouleur de ceinture selon la revendication 1, caractérisé en ce que la cage (32) est reliée au boîtier de l'enrouleur de la ceinture au moyen de goujons de cisaillement (38) qui, lors de la rotation du moyeu (30), sont cisaillés après le pivotement des cliquets d'accouplement (34), et en ce qu'entre la cage (32) et le moyeu (30), opère un ressort de rappel (36) qui ramène la cage (32), après la fin d'un processus de tension, à sa position de départ par rapport au moyeu (30).

3. Enrouleur de ceinture selon l'une des revendications précédentes, caractérisé en ce que trois cliquets d'accouplement (34) sont disposés avec le même intervalle angulaire autour du pignon d'entraînement (16).

4. Enrouleur de ceinture selon l'une des revendications précédentes, caractérisé en ce que les extrémités des cliquets d'accouplement (34), qui peuvent s'engager dans la denture du pignon d'entraînement (16) pour le commander, sont pourvues de plusieurs dents d'accouplement.

5. Enrouleur de ceinture selon l'une des revendications précédentes, caractérisé en ce que la denture du pignon d'entraînement (16) n'a pas de contre-dépouille.

6. Enrouleur de ceinture selon l'une des revendications précédentes, caractérisé en ce que la première extrémité de chaque cliquet d'accouplement (34) est constituée sous la forme d'un appendice bombé (48), qui est monté de façon à pouvoir pivoter dans un évidement formé de façon correspondante sur le côté intérieur du moyeu (30).

7. Enrouleur de ceinture selon l'une des revendications précédentes, caractérisé en ce que le moyeu (30) présente pour chaque cliquet d'accouplement un épaulement radial d'appui (31).
